# EUROPEAN PATENT SPECIFICATION

(11) **EP 1 900 651 B1**
(45) Date of publication and mention of the grant of the patent: **07.03.2012**
(21) Application number: 07022427.4
(22) Date of filing: 01.09.2005
(51) Int. Cl.: B65D 81/38, B65D 3/22, B29C 65/02

(54) **Apparatus for fabricating an insulated container**
Vorrichtung zur Herstellung eines isolierten Behälters
Appareil pour la fabrication d'un conteneur isolé

(30) Priority: 15.04.2005 US 672195 P
(43) Date of publication of application: 19.03.2008
(62) Divisional of application: 05019031.3
(73) Proprietor: SEDA S.p.A., 80022 Arzano-Napoli (IT)
(72) Inventor: D'Amato, Gianfranco, 80022 arzano Napoli (IT)
(74) Representative: Grünecker, Kinkeldey, Stockmair & Schwanhäusser

(56) References cited:
- WO-A-03/057577
- DE-U1- 20 110 390
- US-A- 4 007 670
- US-A- 4 344 814

## Description

The invention generally relates to an apparatus used for fabrication of insulated containers for hot drinks or the like.

There are many examples in the prior art of containers with insulation features for use with hot liquids such as coffee, tea, soups and the like. Examples may be found in US-A-2,266,828, US-A-4,007,670, US-A-5,145,107, US-A-5,460,323, US-A-5,524,817, US-A-5,685,480, and US-A-6,663,926. Each of these containers includes an inner cup and an outer shell separated by an air gap. In modern containers of this type the cup is fabricated of thin paperboard coated inside with a polyethylene resin or the like. The cup and shell are fastened together by gluing them in strategic locations at top and bottom or, in some recent instances, by hot sealing. The air gap between the cup body wall and shell may be maintained by spacers of varying configuration.

Document JP 2001/293802 discloses a cup made of paper with an inner wall and an outer wall that are bonded together by applied heat-sealing varnish to the perimeter of the wall. The outer wall comprises a curl part on its end directed to the opening of the container. The inner wall has a mouth edge part that is bonded and fixed to the outside surface of the curl part through the circular heat-seal varnish.

Document US 5,460,323 shows a container with an inner wall and an outer wrap. The side wall portion of the inner wall is arcuately inwardly bowed. The container is formed of three blanks, which are coated on at least one side. The overlap is sealed. The bottom is sealed with lower edge portion of the blank. The outer wrap is wrapped about the inner container, the coating on the edge portion is heated and then the two parts are bonded together when they are overlapped and pressed together. Further, the lower portions of these heated edge portions bond to the lower skirt portion.

Document JP 2001/294282 shows a container with a body that has many longitudinal ribs protruding outward, and the top end edge has a flange part. On the total periphery of the body an adhesive tape is wound around to connect the ribs and a shrink label is provided.

Document US 4,344,814 shows an apparatus for heat sealing round containers. The container is formed from a blank that is folded to form a plurality of overlapping, side wall seams that must be bonded together. The apparatus comprises an annularly shaped, heated collar that is shiftable into engagement with the rim of the container and then heat is applied evenly along the entire periphery. There is also a male block member that is inserted into the interior of the container. Further extensions extend longitudinally and also include an electrical heating element. Thus, collar sections apply heat to the rim and the extension applies heat to the longitudinally extending seam of the blank so that the container is sealed together.

It is an object of the present invention to provide an apparatus for fabrication of an insulated container such that improved bonds between cup and shell are possible by an improved method of bonding in a simple way.

The foregoing and other objects are realized by an apparatus for bonding with the features of claim 1.

The thermo-sealable plastic coating is provided on the inside of said shell and after heating the coating and seating the cup within the shell at least one bonding spot and/or bonding area for bonding said shell to said cup body by the plastic coating is only locally formed within a corresponding contact path. This "contact path" is generally a virtual contact path where outer surface of cup body and inner surface of the shell may be in contact when the cup is seated within the shell. However, it is not necessary that there is an actual contact between the corresponding walls of shell and cup body along all of their circumference but the contact path may only extend partially along the circumference wherein within this contact path corresponding bonding spots and/or bonding areas are located. Those are only locally formed by the corresponding method wherein shell and cup wall are pressed together at least at one of such bonding spots and/or one of such bonding areas which are localized within said contact path.

As the corresponding thermo-sealable plastic coating is melted prior to inserting the cup in the shell both then will be bonded in the corresponding bonding spots and/or bonding areas by this coating after hardening.

Of course, it is also possible that the contact path is an annular path which also may completely circulate cup body and shell and may have a certain extension in vertical direction which means perpendicular to the corresponding circumferential direction.

It is sufficient to only use one bonding spot or bonding area as they are only used to prevent losing the inner cup during handling the container for assembly, packaging, nesting or the like. After a corresponding hot drink or the like is filled in the container the inner cup will remain within the shell mainly by the weight of the corresponding drink such that a corresponding bonding spot or bonding area only needs to provide quite little bonding force.

However, it is also possible to more securely fix cup body and shell to each other by, for example, providing a number of bonding spots and/or bonding areas formed along the contact path, all separated from each other by bonding free parts of said contact path. Moreover, the bonding spots and/or bonding areas may be arranged side-by-side and separated from each other in horizontal and/or vertical direction within the contact path. This means that single bonding spots or bonding areas are arranged in horizontal or vertical direction or that a group is formed by such bonding spots or bonding areas which, for example, are arranged in vertical direction and that such groups are then arranged side-by-side in horizontal or circumferential direction.

It is possible to provide the corresponding bonding spots and/or bonding areas unevenly distributed in circumferential direction. To improve the assembly of the container and also the corresponding method of fabricating it may be advantageous if the corresponding spots or areas are evenly distributed.

The thermo-sealable material is a thermo-sealable plastic coating according to the invention.

The corresponding insulated container has a gap between cup wall and shell wall in a lower section of the container and generally the air gap should be maintained without any heat transferring connections. Consequently, it will be advantageous to form the corresponding contact path between an annular upper wall section of the cup body and an upper essentially cylindrical section of said shell. In this part of the container a corresponding gap is not necessary as the contact path is arranged higher than the level of the beverage filled in the container.

It is also possible to arrange said bonding spots and/or bonding areas immediately adjacent to the lower edge of said annular upper wall section of the cup body, where an upper shoulder is formed. Below this upper shoulder the gap will start.

Different materials are possible for shell or cup wherein also at least one of those may be made of a corresponding plastic material. For recycle reasons it is also possible that cup and/or shell are made of paperboard. To obtain sufficient fluid density of at least the cup the corresponding paperboard for forming the cup is coated with the above mentioned polyethylene resin or the like. Of course, the paperboard can also be coated with the thermo-sealable plastic coating wherein it may be provided also on the outside of the cup wall.

The corresponding bonding spots or bonding areas may have different shapes. For example, bonding spots may have circular, rectangular or other cross-section. The corresponding bonding areas may have the form of short stripes wherein the stripes may be horizontally arranged or may also be inclined with respect to circumferential direction.

For melting the corresponding plastic coating it is sufficient to only heat it locally but it is also possible that, for example, the plastic coating as an annular strip is completely heated.

For obtaining sufficient force to press cup wall and shell wall together until the thermo-sealable plastic coating is again hardened an annular first member with at least one radially displaceable or protruding pressing element can be positioned inside the cup body which pressing member presses against an external second member to press the walls of cup body and shell together by both members to form one or more bonding spot and/or bonding area. It is of course also possible that the corresponding pressing members are part of the external second member or that those pressing members are provided by both members.

It is also possible that such pressing members are not in direct contact with one of the walls of the container but that they deform, for example, an annular and flexible ring from its inside and that this ring with its deformed parts on its outside will then press the walls of cup body and shell together by cooperation with the other member.

A corresponding apparatus for bonding outer shell and inner cup to form an insulated container for hot liquids or the like comprises such first member to be arranged within the inner cup, such second member generally concentric with said first member and arranged outside the outer shell, and at least one radially protruding or movable pressing member to press opposed shell and cup walls together to form one or more bonding spots and/or bonding areas along the circumference of shell and cup.

The first member may be an annular ring or a disk that is inserted within the cup body. This annular ring or disk may support the corresponding pressing member or members such that they are movable in radial direction.

A simple embodiment of such a movable pressing member is a plunger movably supported by said first and/or second member.

To obtain evenly distributed bonding spots or bonding areas the corresponding number of radially movable pressing elements are also evenly distributed along the circumference of first or second member.

To arrange the shell prior to insertion of the cup body the apparatus comprise a receiving member with at least a skirt portion and an upper flange used for holding the shell.

To use the corresponding receiving member also as a second or external member it is possible that a counter pressing extension extends from the upper flange of the receiving member in essentially vertical direction. Then, the corresponding movable pressing members may be part of the first or annular member and no second and separate member is necessary.

It is also possible to use the receiving member for holding the cup body in a predetermined position wherein this may be realized by an upper end of the counter pressing extension which is used as a seat for the outward curl of the cup body.

The invention is illustrated more or less diagrammatically in the drawings, in which:
- FIGURE 1: is a side elevational view of an insulated container comprising an inner cup, an outer shell and embodying a first form;
- FIGURE 2: is a bottom plan view of the container of Figure 1;
- FIGURE 3: is a side elevational view of the container in Figure 1, with the elements of the container in vertical section;
- FIGURE 4: is an enlarged, vertical sectional view through the top of the shell of the container of Figure 1, showing a first container assembly step;
- FIGURE 5: is a view similar to Figure 4 showing insertion of the cup in the shell;
- FIGURE 6: is a view similar to Figure 4 showing dot welding of the shell and cup in a further container assembly step;
- FIGURE 7: is a top plan view of the container and a corresponding tool or apparatus for dot welding;
- FIGURE 8: is a perspective view of a container matted with the tool of Figure 7 for dot welding according to the invention;

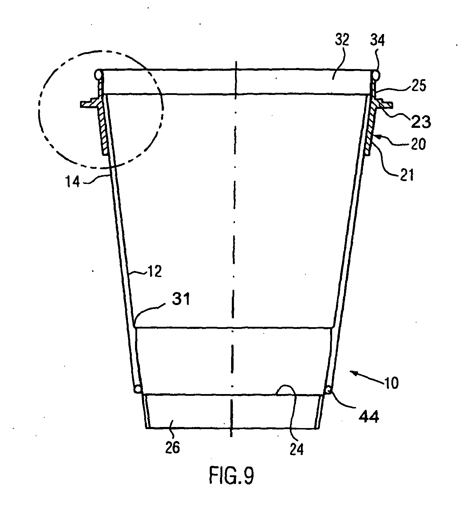

- FIGURE 9: is a view similar to Figure 3 of an insulated container embodying a second form ;
- FIGURE 10: is a view similar to Figure 4 of the second container embodiment showing the first assembly step;
- FIGURE 11: is a view similar to Figure 5 of the second container embodiment in a further assembly step, and
- FIGURE 12: is a view similar to Figure 6 of the second container embodiment showing a further assembly step.

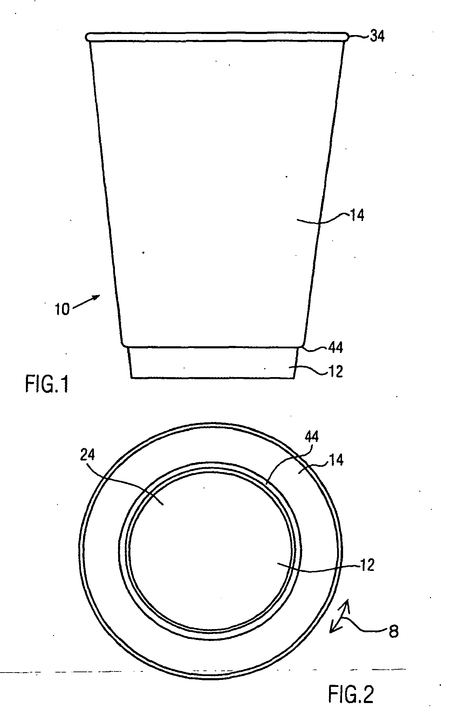

Referring now to the drawings, in particular to Figures 1 to 3, a hot drink container is illustrated generally at 10. The container includes an inner cup 12 and an outer shell 14 telescoped together and spot bonded to each other according to the present invention.

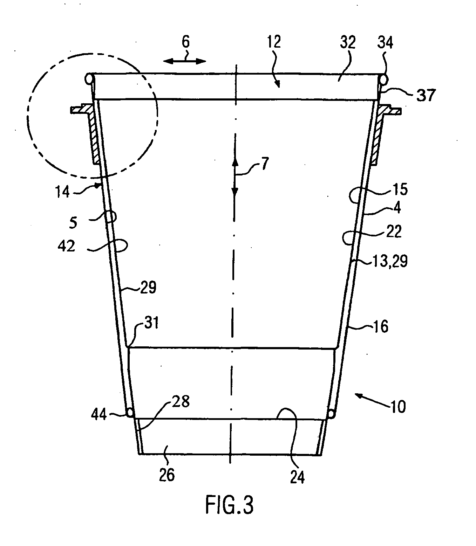

According to Figure 3 the inner cup 12 includes a cup body 22 and a cup bottom 24, separately formed of paperboard in a conventional manner. Prior to fabrication, the paperboard is coated on one side with thermo-sealable plastic material such as polyethylene or the like. The assembled cup 12 then has an internal coating 15 of polyethylene over all or a portion of its internal surface.

A frusto-conical wall 29 of the cup body 22 has an annular shoulder 31 formed inwardly from it near cup bottom 24. The shoulder 31 acts as a stop for the next cup above when cups are stacked.

The cup bottom 24 is seated in the body 22 in the manner illustrated. A segment 26 of the lower edge of the cup wall 29 is folded inwardly and upwardly to capture an annular, downwardly extending skirt section 28 of the cup bottom 24.

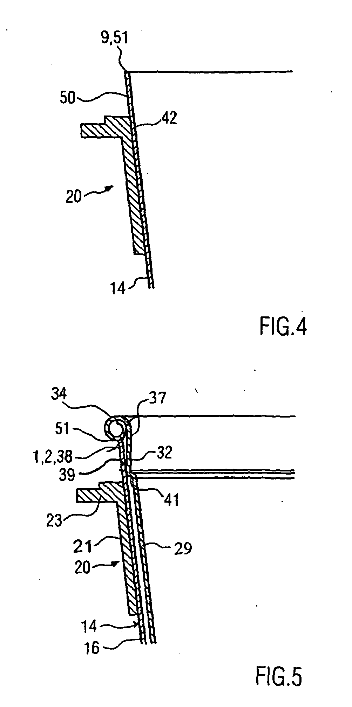

The cup body 22 also has an annular upper shoulder 32 formed outwardly of its frusto-conical side wall 29 for a distance of 5 mm or more downwardly from an outward curl 34 which forms an upper edge of the body. Between shoulder 32 and curl 34 an upper wall section 37 with an annular outer surface 38, see also Figure 5, is arranged with a lower portion 39 of the surface, at shoulder's edge 41, which serves as a bonding spot or bonding area 1 or 2 to which the annular inner surface of the shell 14 is bonded, in a manner hereinafter discussed.

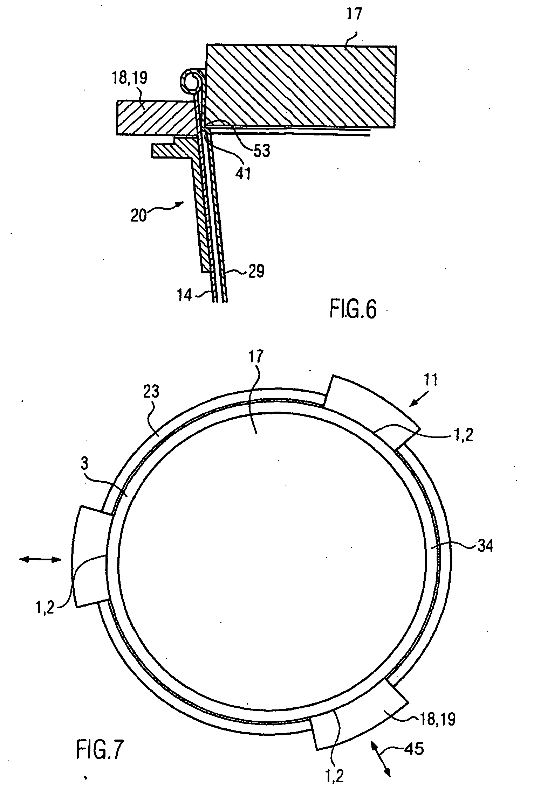

The outer shell 14 is, like the cup wall 29, frusto-conical in shape. The shell 14 is formed from paperboard which has an internal coating 42 of a thermo-sealable plastic material. The internal coating may be over all or only in a bonding area or spot along a corresponding contact path 3, see also Figure 7, of the shell 14. The shell 14 has an inward curl 44, see Figure 3, formed on its lower edge, and this inward curl engages the outer surface 4 of the cup body wall 29 above the lower end of the cup 12 at a distance corresponding approximately to the height of the cup bottom 24.

An annular upper edge 9 or 51, see also Figure 5, of shell 14 is immediately adjacent the curl 34 of the cup body 22 and may abut same from below. The shell 14 extends downwardly from there to a narrow, annular surface where it engages at least partially the upper wall section 37 and the annular outer surface 38 at and slightly above the lower edge 41 of the shoulder 32.

The thermo-sealable plastic coating 42 inside shell 14 is locally melted before cup 12 and shell 14 are assembled. After assembly the shell 14 is thermally bonded at one or more bonding spots or bonding areas 1,2 illustrated, for example, in Figure 6 as the spot weld 53, where it is bonded to the cup body shoulder 32 or the annular outer surface 38 adjacent its lower edge 41, i.e. at a distance of about 5 mm from the curl 34. Although the use of three spot welds 53 annularly spaced at regular intervals is described here, however, there may be as few as one or there may be more than three, and they may not be evenly spaced if more than one is used.

It is also possible to arrange a number of such bonding spots or bonding areas above each other in vertical direction 7, see Figure 3, or side-by-side in horizontal direction 6 or circumferential direction 8, see Figure 2.

Referring now to Figures 4 to 8, container 10 is fabricated according to the invention in the following steps:
- the shell 14 is fabricated of paperboard, which is selectively coated internally with a thermo-sealable plastic material such as polyethylene, by forming around a frusto-conical mandrel;
- the shell is then removed from the mandrel and seated inside the corresponding shaped receiver or receiving member 20, see Figure 4. This receiving member 20 comprises a frusto-conical skirt portion 21, see Figure 5, which is in abutment with the outer surface of the shell wall 16. At the upper end of the skirt portion 21 receiving member 20 has a radially outwardly extending upper flange 23.

In a next step an annular heating element is positioned against the inside of the shell 14 and strips of the polyethylene coating are heated to its melting point, see Figure 6.

A previously assembled cup 12 is then drawn by suction into the shell until the annular periphery of its upper shoulder 32 seats against the shell at the melted strip along the corresponding contact path 3, see also Figure 7.

An annular disk 17 as a first member of a corresponding apparatus 11 for fabricating the corresponding container 10 is then positioned inside the cup body 22 and snugly engages the inner surface of the cup body above the upper shoulder 32, see for example Figures 6 to 8.

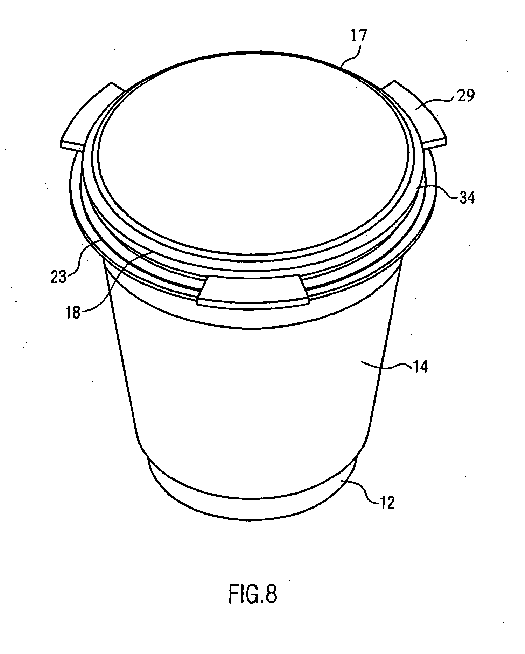

An annular ring 18 as a second member of the corresponding apparatus 11 incorporating three radially extendable plungers as pressing members 19 is then placed around the shell 14 at the level of the melted strip and the plungers are extended to press shell and cup walls together, see for example Figure 6, until they bond together at, for example, three spot welds 53 or bonding spots 1 or bonding areas 2, respectively. Such spot weld is referred to herein as a dot weld, see also Figures 7 and 8.

Disk and ring are then removed and the assembled container is ejected from the receiving member 20.

According to Figure 6 it is not necessary that the upper wall section 37 is contacted by all of the upper end section of shell wall 16 and it is possible that a small gap is provided between both just below outward curl 34. Only along the contact path 3, see Figure 7, which is for example arranged adjacent to the upper annular shoulder 32 corresponding bonding spots or bonding areas may be produced by pressing first member 17 and second member 18 together, see Figures 6 and 7.

In Figure 8, and also Figure 7, the ring-like second member 18 with the plunger 19 is illustrated wherein it is arranged between the upper surface of upper flange 23 of receiving member 20 and the lower end of outward curl 34, see again Figure 6.

In Figure 7 it is also illustrated that the corresponding plungers as pressing members 19 are evenly distributed along circumferential direction 8 around container 10 and that three bonding spots or bonding areas are formed. The corresponding pressing members 19 are movable in displacement direction 45.

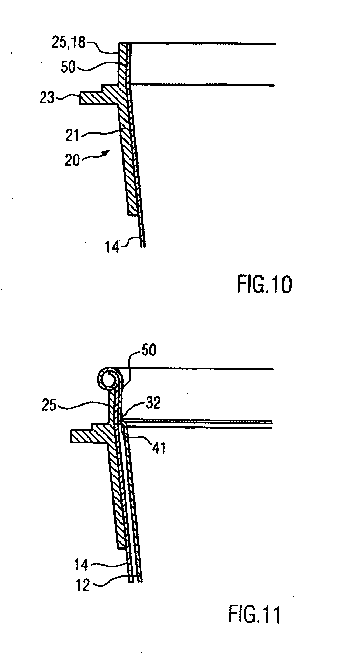

Referring now to Figures 10 to 12, a container is seen generally at 10 in various stages of assembly. The container 10 is identical in construction to the previous described container, except for one feature. The cup 12 of the container is identical to the previously described cup but shell 14 has a short cylindrical section 50 formed at its upper end. This cylindrical section 50 of shell 14 seats flush against the outer surface 38 of upper wall section 37, see also the previous figures. Cup 12 and shell 14 are spot bonded together at one or more spots 53 as bonding spots 1 or bonding areas 2 corresponding to those in the cup 10, i.e. around shoulder 32 immediately adjacent to its lower edge 41. Although a cylindrical section 50 seats flush against cup 12 above shoulder 32, it should be understood that the section 50 is not bonded to the cup body above the ring of spot bonds 53 and that corresponding spot bonds or spot welds 53 are separated from each other by bonding-free parts of the corresponding contact path 3.

Also the receiving member 20 of the second embodiment is different from the first embodiment in that it has an integrally formed second member 18 which is formed by counter pressing extension 25 vertically extending from an upper surface from upper flange 23 of the receiving member 20. An upper end 27 of extension 25 abut curl 34 from below.

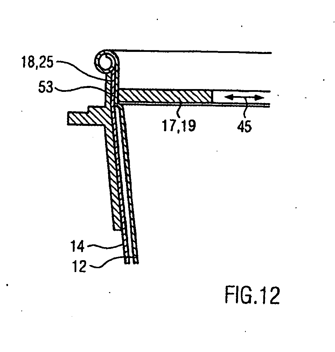

The cup 10 is fabricated according to the invention in the following steps:
- the shell is fabricated of paperboard which is selectively coated internally with the thermo-sealable plastic material such as polyethylene, by forming around a frusto-conical mandrel having an upper, circular cylindrical section;
- the shell 14 is then removed from the mandrel and seated inside the corresponding shaped receiving member 20, see Figure 10;
- an annular heating element is positioned against the inside of the shell 14 and a strip of the polyethylene coating is heated to its melting temperature;
- a previously assembled cup 22 is then drawn by suction into the shell 14 until the annular periphery of the shoulder 31 of the cup body seats against the shell at the melted strip, see Figure 11;
- an annular ring as a first member 17, see Figure 12, incorporating for example three radially extendable plungers as pressing members 19 is then positioned inside the cup body 22 at the level of the melted strip and the plungers are extended to press shell and cup walls together against the external receiving member 20 and in particular against the corresponding counter pressing extension 25 until they are bonded together at, for example, three spot or dot welds 53, see Figure 12;
- the ring 17 is then removed and container 10 is ejected from the receiving member 20.

Each container embodiment hereinbefore described is characterized by having a thermo-sealable plastic coating inside of its shell 14 bonded to the outer surface of a cup 12 by heat and pressure at a plurality of spot welds 53 which may be bonding spots 1 or bonding areas 2. The corresponding spot welds extend around and between those components. Those spot welds lie in an annular path, see contact path 3, adjacent the bottom edge of an upper wall section 37 of the cup body or upper cylindrical section 50 of the shell 14.

## Claims

1. An apparatus (11) for forming an insulated container (10) for hot liquids or the like by bonding an outer shell (14) to an inner cup (12) **characterized in that** it comprises:
a) a receiving member (20) with at least a skirt portion (28) and an upper flange (23) used for holding the outer shell (14);
b) an annular heating element adapted to heat a sealable plastic coating (42) on an inside of the outer shell (14);
c) a first member (17) to be arranged within the inner cup (12);
d) a second member (18) concentric with said first member (17) and arranged outside the outer shell (14), and
e) at least one radially protruding or movable pressing member (19) as part of the first and/or second member (17, 18), wherein the at least one radial protruding or movable pressing member is adapted to press against the second member (18) and/or the first member (17), respectively in order to press the walls (13, 16) of the inner cup (12) and the outer shell (14), with previously heated sealable plastic coating of the outer shell (6), at the level of the melted strip and after inserting the inner cup (12) in the outer shell (4) together to only locally form a bonding spot (1) and/or bonding area (2) along their circumferences.

2. The apparatus according to claim 1, **characterized in that** said first member (17) is an annular ring or a disk.

3. The apparatus according to claim 1 or 2, **characterized in that** said radially movable pressing member (19) is a plunger movably supported by said first and/or second member (17,18).

4. The apparatus according to one of the claims 1 to 3, **characterized in that** a number of said radially movable pressing elements (19) are arranged evenly distributed along the circumference of said first or second member (17,18).

5. The apparatus according to claim 1, **characterized in that** a counter pressing extension (25) as second member (18) extends from the upper flange (23) in essentially vertical direction (7).

6. The apparatus according to claim 5, **characterized in that** an upper end (27) of the counter pressing extension (25) is used as a seat for an outward curl (34) of the cup body (22).

## Patentansprüche

1. Vorrichtung (11) zum Herstellen eines isolierten Behälters (10) für heiße Flüssigkeiten oder dergleichen durch Verkleben einer äußeren Hülle (14) mit einem inneren Becher (12), **dadurch gekennzeichnet, dass** sie umfasst:
a) ein Aufnahmeelement (20) mit wenigstens einem Sockelelement (28) und einem oberen Flansch (23), der dazu dient, die äußere Hülle (14) zu halten;
b) ein ringförmiges Heizelement, das so eingerichtet ist, dass es einen siegelfähigen Kunststoffüberzug (42) an einer Innenseite der äußeren Hülle (14) erhitzt;
c) ein erstes Element (17), das im Inneren des inneren Bechers (12) angeordnet wird;
d) ein zweites Element (18), das konzentrisch zu dem ersten Element (17) ist und außerhalb der äußeren Hülle (14) angeordnet ist, und
e) wenigstens ein radial vorstehendes oder bewegliches Presselement (19) als Teil des ersten und/oder zweiten Elementes (17, 18), wobei das wenigstens eine radial vorstehende oder bewegliche Presselement so eingerichtet ist, dass es jeweils gegen das zweite Element (18) und/oder das erste Element (17) presst, um die Wände (13, 16) des inneren Bechers (12) und der äußeren Hülle (14) mit zuvor erhitztem siegelfähigem Kunststoffüberzug der äußeren Hülle (6) auf der Höhe des geschmolzenen Streifens und nach Einsetzen des inneren Bechers (12) in die äußere Hülle (4) zusammenzupressen und nur lokal einen Klebepunkt (1) und/oder eine Klebefläche (2) an ihrem Umfang entlang auszubilden.

2. Vorrichtung nach Anspruch 1, **dadurch gekennzeichnet, dass** das erste Element (17) ein Ring oder eine ringförmige Scheibe ist.

3. Vorrichtung nach Anspruch 1 oder 2, **dadurch gekennzeichnet, dass** das radial bewegliche Presselement (19) ein Kolben ist, der von dem ersten und/oder zweiten Element (17, 18) beweglich getragen wird.

4. Vorrichtung nach einem der Ansprüche 1 bis 3, **dadurch gekennzeichnet, dass** eine Anzahl der radial beweglichen Presselemente (19) gleichmäßig verteilt am Umfang des ersten oder des zweiten Elementes (17, 18) angeordnet sind.

5. Vorrichtung nach Anspruch 1, **dadurch gekennzeichnet, dass** sich eine Gegen-Pressverlängerung (25) als zweites Element (18) in im Wesentlichen vertikaler Richtung (7) von dem oberen Flansch (23) erstreckt.

6. Vorrichtung nach Anspruch 5, **dadurch gekennzeichnet, dass** ein oberes Ende (27) der Gegen-Pressverlängerung (25) als eine Aufnahme für eine Anrollung (34) des Becherkörpers (20) nach außen dient.

## Revendications

1. Appareil (11) pour former un récipient isolé (10) pour liquides chauds ou similaires en attachant une coque externe (14) à une tasse interne (12), **caractérisé en ce qu'**il comprend :
a) un élément de réception (20) avec au moins une partie de jupe (28) et une bride supérieure (23) pour maintenir la coque externe (14) ;
b) un élément de chauffage annulaire adapté pour chauffer un revêtement plastique thermo-soudable (42) sur un côté interne de la coque externe (14) ;
c) un premier élément (17) à agencer dans la tasse interne (12);
d) un deuxième élément (18) concentrique avec ledit premier élément (17) et agencé à l'extérieur de la coque externe (14), et
e) au moins un élément de compression mobile ou faisant saillie radialement (19) faisant partie du premier et/ou du deuxième élément (17, 18), dans lequel l'au moins un élément de compression mobile ou faisant saillie radialement est adapté pour pousser respectivement contre le deuxième élément (18) et/ou le premier élément (17), de manière à pousser sur les parois (13, 16) de la tasse interne (12) et de la coque externe (14), avec le revêtement plastique thermo-soudable préalablement chauffé de la coque externe (6) à hauteur de la bande fondue, et après l'insertion combinée de la tasse interne (12) dans la coque externe (4) pour ne former que localement un point de liaison (1) et/ou une zone de liaison (2) le long de leur circonférence.

2. Appareil selon la revendication 1, **caractérisé en ce que** ledit premier élément (17) est un anneau ou un disque.

3. Appareil selon la revendication 1 ou 2, **caractérisé en ce que** ledit élément de compression mobile radialement (19) est un piston supporté de façon mobile par ledit premier et/ou deuxième élément (17, 18).

4. Appareil selon l'une des revendications 1 à 3, **caractérisé en ce qu'**un certain nombre desdits éléments de compression mobiles radialement (19) sont agencés régulièrement sur la circonférence dudit premier ou deuxième élément (17, 18).

5. Appareil selon la revendication 1, **caractérisé en ce qu'**une extension de contre-pression (25) constitue le deuxième élément (18) et s'étend depuis la bride supérieure (23) en direction essentiellement verticale (7) .

6. Appareil selon la revendication 5, **caractérisé en ce qu'**une extrémité supérieure (27) de l'extension de contre-pression (25) est utilisée comme siège pour un enroulement vers l'extérieur (34) du corps de la tasse (22).
